(19) Europäisches Patentamt
European Patent Office
Office européen des brevets

(11) EP 0 691 941 B1

(12) EUROPEAN PATENT SPECIFICATION

(45) Date of publication and mention
of the grant of the patent:
02.05.1997 Bulletin 1997/18

(21) Application number: 94910491.3

(22) Date of filing: 28.03.1994

(51) Int Cl.⁶: **C03B 9/41**
// G05D16/20

(86) International application number:
PCT/GB94/00644

(87) International publication number:
WO 94/22777 (13.10.1994 Gazette 1994/23)

(54) **CONTROL SYSTEM SUITABLE FOR GLASSWARE FORMING MACHINE**

STEUEREINRICHTUNG FÜR EINE GLASFORMMASCHINE

SYSTEME DE COMMANDE DESTINE AUX MACHINES DE FABRICATION D'ARTICLES EN VERRE

(84) Designated Contracting States:
**DE ES FR GB IT**

(30) Priority: 01.04.1993 GB 9306896

(43) Date of publication of application:
17.01.1996 Bulletin 1996/03

(73) Proprietor: **Emhart Glass Machinery Investments Inc.**
**Wilmington, Delaware 19801 (US)**

(72) Inventors:
• **PLATER, Neil, James**
**Doncaster DN1 2LU (GB)**
• **COUNSELL, John**
**Wirral, Merseyside L48 9XG (GB)**
• **ROSKILLY, Anthony Paul**
**Newcastle-upon-Tyne NE7 7UY (GB)**

(74) Representative: **Nash, Keith Wilfrid**
**KEITH W. NASH & Co.**
**Pearl Assurance House**
**90-92 Regent Street**
**Cambridge CB2 1DP (GB)**

(56) References cited:
US-A- 4 367 087

**Description**

Field of the invention

This invention relates to a control system especially a control system suitable for use in a glassware forming machine, and to an electronically controlled pneumatic valve for controlling the movement of a moveable member in such a machine.

Background to the invention

In a common type of glassware forming machine, the so-called I.S. machine a gob of molten glass is formed at a blank station into a parison, the parison is transferred to a blow station at which it is blown into a container, and the blown container is then removed from the machine to a cooling station and thence to a conveyor.

The parison when it is transferred from the blank station to the blow station, and the blown container when it is moved from the blow station to the cooling station, are at comparatively high temperatures, and the glass of which they are formed is readily deformable. Consequently, movement of the parison and the blown container has to be very carefully controlled to avoid distortion or damage, while at the same time such movement needs to be carried out as quickly as possible to obtain the maximum output from the machine.

In the case of movement of the parison from the blank station to the blow station, this is usually performed by an invert mechanism which carries the parisons of hot glass from the blank station through about 180° about a horizontal axis, to the blow station. In the case of movement of the blown container from the blow station to the cooling station, this is usually performed by a take out mechanism. which picks the blown containers up from the blow station and moves them, in a vertical orientation, through an arcuate path to the cooling station.

Critical control of the movement of the take out mechanism and of the invert mechanism during their operation to move the glass is necessary, in order to avoid distortion of the still soft glass and damage due to any sudden uncontrolled motion.

There are certain other mechanisms in a glassware forming machine where critical control of the movement of a mechanical member is desirable, in that faster and more precise operation and a longer life can thus be obtained.

In glass machines, the motive power for the various mechanisms is normally comparatively low pressure air at about 3.2 bar. Electrical power has been used, but suffers from the disadvantage that the severe ambient conditions, i.e. the high temperatures caused by the presence of molten glass, means that electrical motors robust enough to give reliable service over a long period of time tend not only to be bulky, but also very expensive. Hydraulic power has also been used, and has some advantage, but requires significantly more maintenance than pneumatic power and suffers from the attendant high fire risk if a leak of the hydraulic oil takes place, again because of the presence of hot glass.

One of the problems in using pneumatic power for driving the mechanisms is that, because of the compressibility of air and the comparatively high inertia of the mechanisms to be driven, it is difficult to obtain movement of the components reliably and accurately between desired rest positions; thus a degree of oscillation about an eventual rest position is very difficult to avoid.

In International Patent Application WO 93/18445, published on 16.09.93 and thus falling within the terms of Article 54 (3) EPC, is described a control system which utilizes a solenoid driven proportional pneumatic valve to control the movement of a driven member by a piston and cylinder device, the operation of the valve being controlled by an electronic signal processing system which is provided with a feed back from a simple transducer which senses the position of the driven member. This control system operates satisfactorily, but suffers from the drawback that it requires a sensitive transducer which will nevertheless resist the severe environment of a glassware making machine, and such transducers are not readily available.

US Patent No 4367087 describes a similar control system having a solenoid driven pneumatic valve to control the movement of a driven member by a piston and cylinder device. The operation of the valve is controlled by controlling a valve in the exhaust line of the cylinder, and a separate pressure regulator is preferably provided for intake control In this control system feedback is also provided from pressure sensors which sense the pressure on opposite sides of the piston of the piston and cylinder device.

It is an object of the present invention to provide an alternative control system which will achieve the aforesaid critical control and which will operate reliably in the severe environment of a glassware making machine.

The present invention provides in one of its aspects a control system for controlling the movement of a driven member arranged to be driven between first and second positions by a pneumatic piston and cylinder device comprising

a solenoid driven proportional pneumatic valve adapted to control the supply of air under pressure to the piston and cylinder device,
a transducer which senses the position of the driven member,

pressure sensors which sense the pressures on opposite sides of the piston of the piston and cylinder device, and an electronic signal processing system incorporating a memory in which a motion profile is stored, which processing system throughout each cycle receives as a feedback from the transducer the position of the driven member and the pressure on opposite sides of the piston and which produces control signals for the valve in accordance with a repetitive algorithm which takes account of

(a) the displacement of the driven member from the motion profile,

(b) the velocity of the driven member as derived from the rate of change of its position, and

(c) the force exerted on the driven member as derived from the pressure difference across the piston

so that the valve supplies air to the piston and cylinder device to cause the member to move from rest at the first position to rest at the second position in a manner determined by the motion profile with the velocity and acceleration of the driven member being controlled so that the member moves from rest at the first position to rest at the second position without exceeding permitted maximum values of acceleration.

A control system according to the invention as set out in the last preceding paragraph is particularly suitable for use in controlling the movement of a mechanism such as a take out mechanism or an invert mechanism in a glass forming machine, where it is desired to follow a specified motion profile. When a take out mechanism is operating, because the take out arm is moved in an arc about a horizontal axis, there is a cyclical variation of the load on the arm. Similar variations of the load can occur with other mechanisms, such as an invert mechanism.

Preferably, in a control system according to the invention the algorithm also takes account of variation of the load of the member with movement of the piston and cylinder device.

The present invention also provides in another of its aspects, an operating mechanism for a glassware forming machine comprising a driven member, a pneumatic piston and cylinder device arranged to operate the driven member, and a control system as hereinbefore defined in which the proportional pneumatic valve controls the supply of air under pressure to the piston and cylinder device.

Description of Embodiment

There now follows a description of a mechanism embodying the invention to be read with reference to the accompanying drawings in which:

Figure 1 is a schematic diagram of a pneumatic servo takeout mechanism for glassware for a glassware forming machine;

Figure 2 indicates schematically the construction of the control valve shown in Figure 1;

Figure 3 is a block diagram of a servo control card; and associated components;and

Figure 4 is a block diagram of a controller for the take out mechanism and is an illustration of the embodied algorithm.

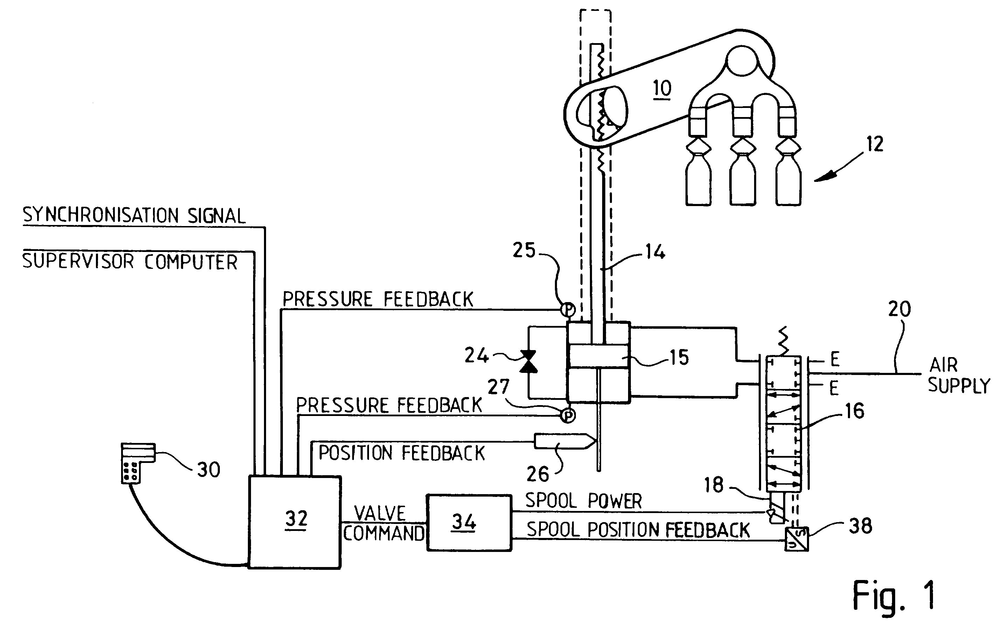

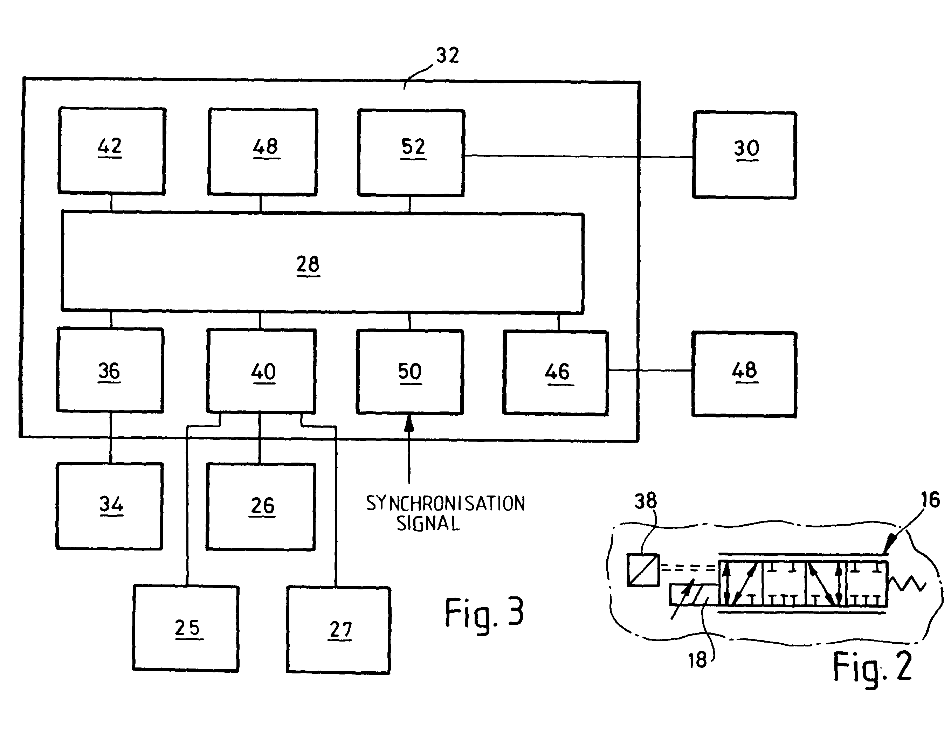

Referring first to Figure 1, the illustrated takeout mechanism comprises a driven member in the form of a pivoted arm 10 carrying tongs 12 adapted to grip three formed glassware containers at a blow mould station. The arm 10 is drivable in rotation about its pivot axis by a rack which is an extension of a piston rod 14 carrying a piston head 15 of a pneumatic piston and cylinder device. The displacement of said device is controlled by a proportional pneumatic valve 16 (see also Figure 2) operated by a solenoid 18 fed with appropriate control signals, whereby the arm 10 is swung upwardly and over to transfer the glassware from the moulding station to a cooling station. Having set the glassware down at the cooling station, the tongs 12 are released and the arm 10 is returned under pneumatic control, ready to pick up the next three formed containers at the moulding station.

For maximum throughput of glassware in the machine, the transfer of the arm 10 between stations should take place as quickly as practicable.

This presents no problem on the return stroke of the arm; but during the forward stroke, when the arm is transferring formed glassware which is still soft, distortion damage or defects of the glassware can occur if the motion is not carefully controlled. The transfer motion needs to take place as rapidly as possible compatible with the avoidance of such distortion, damage and defects in the glassware, and it is a principal object of the present invention to provide a solution to this problem.

The proportional pneumatic valve 16 is fed by a pneumatic air supply 20 at a nominal pressure of 45 p.s.i, and the piston has associated with it a manual bypass valve 24.

The solenoid 18 which operates the valve 16 is supplied with control signals fed from processing electronics which throughout each cycle receives inputs from a position transducer 26 associated with the piston 15, (and thus with the arm 10 which is proportionally pivoted by the piston) and from two pressure sensors 25 and 27 which are respectively arranged to sense the pressure above and below the piston.

Referring now to Figure 3, card 32 provides a signal processing system. This comprises a micro-controller 28 which is connected to a proportional valve controller 34 and provides spool position demand signals to the valve controller 34 through a digital/analog converter 36.

The micro-controller 28 is connected through an analog/digital converter 40 to the position transducer 26 which provides signals indicating the actual position of the mechanism and to the pressure sensors 25 and 27 which provide signals indicating the pressures above and below the piston head 15. The micro controller 28 is also connected to an EPROM 42 and RAM 48 in either of which is stored the profile program for the mechanism movement.

The machine comprises a supervisory computer 48 which is connected through a network interface 46 to the micro-controller 28 and then to the RAM 48 to which the algorithm information is passed and stored and which is accessed by the micro-controller 28 at appropriate times.

The synchronization signal is supplied to the micro-controller 28 through a digital interface 50. Alternatively, the micro-controller 28 can provide the synchronization signal internally.

A UART (universal Asynchronous Receiver Transmitter) 52 is connected to a Hand Held Terminal (HHT) 30 to allow the constant factors of the algorithm program to be adjusted to enable the actual profile to be followed to be modified. These factors are provided to the micro-controller 28. Thus the micro-controller 28 takes the profile program from the EPROM 42 or RAM 48, the algorithm program from the EPROM 42 or RAM 48, and the individual factors from the EPROM 42, RAM 48 UART 52, or Supervisory Computer 44 and combines them to enable it repetitively to use the algorithm program and profile program to enable it to provide the necessary spool position demand signals to the valve controller 34.

An operator interface is provided. The embodiment uses the HHT 30 or the Supervisory Computer 44. If desired, the HHT 30 can be dispensed with and the necessary individual factors provided from the supervisory computer 44.

The supervisory computer 44 comprises display means which is arranged to display motion profile data. The HHT 30 is connected to the card 32 and by its operation the motion profile data can be modified.

The valve controller 34 and the valve 16 form a servo system, the controller 34 receiving a feed-back signal indicating the actual spool position from a sensor 38 and developing the actual valve control signals from the valve spool demand signals supplied by the micro-controller 28 and the feed-back signals from the sensor 38.

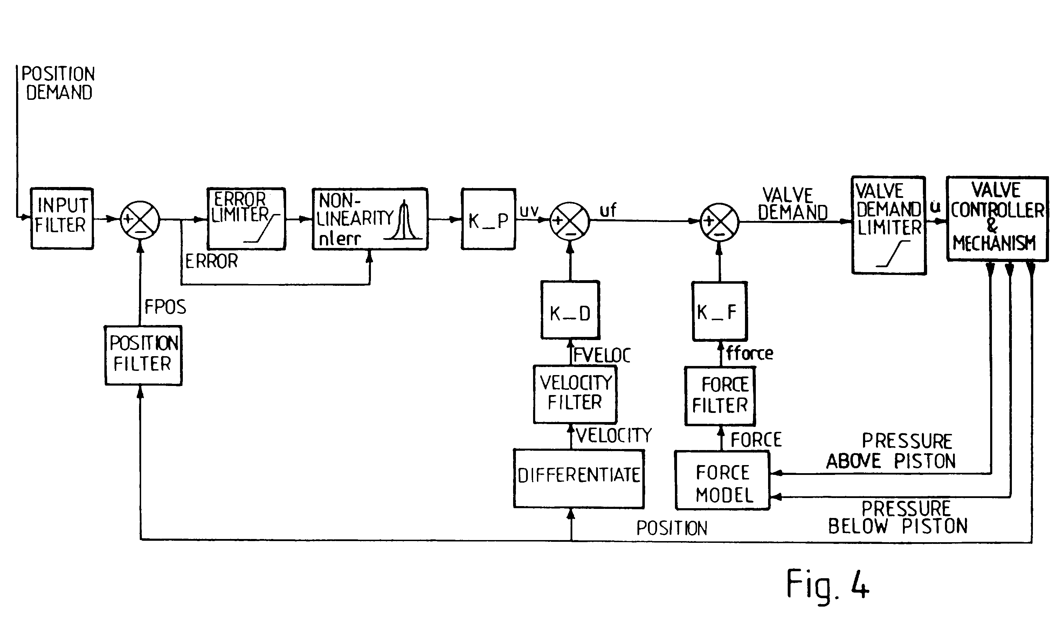

An algorithm, which may be used to generate an output signal to the valve controller 34 to cause the valve 16 to control movement of the piston 14 and thus of the arm 10, will now be described with reference to Figure 4, which is a functional block diagram of the machine controller.

The various parts of the controller are described below.

Force, Velocity, Position and Input Filters

In all cases a simple low-pass filter is used to reduce high frequency signal noise. One example, given below is the low pass filter for the force signal.
The filtered force, fforce, is given by

$$\text{fforce} = af*fz\text{-}l + bf*FORCE \tag{1}$$

where: af and bf are constants in the force filter

fz-1     is the calculated filtered force from the previous algorithm iteration
FORCE is force value calculated during the present iteration of the algorithm
af=     iter * T_F/(1.0 + iter*T_F)
bf=     1.0/(1.0 + iter*T_F)
iter     is the iteration rate of the controller (Hz)
T_F     is the filter constant which is tuned to give an acceptable level of valve noise

The filters are all of the same form. The equations for the force filter are shown above. The corresponding variables used in the other filters are listed in the table below; the filtered vasriable being calculated by an equation of the same form as equation (1).

The input, force position and velocity signals are filtered in a similar manner. The values of the filter constants for the input, force, velocity and position are tuned upwards from a very low value until an acceptable level of noise is achieved on each signal whilst still achieving the required performance. The penalty for increasing the value too high is loss of performance due to the increased time delay which accompanies the increased smoothing effect of the filter.

The input filter prevents noise from being transmitted through the system. The filter helps to prevent high frequency resonances within the controlled system from being excited.

The corresponding variables for the four filters are listed below :

| Force | Velocity | Input | Position | |
|-------|----------|-------|----------|---|
| fforce | FVELOC | infil | FPOS | {filtered variable] |
| T_F | T_V | T_I | T_P | [Tuned filter constants] |
| af | av | ai | ap | )calculated filter |
| bf | bv | bi | bp | )constants |
| FORCE | veloc | demand | POSIT | Values during present iteration |
| fz-l | fvz-l | infil-l | fpz-l | Filtered values from previous iteration |

veloc      the calculated mechanism velocity
demand   this comes from the demand profile. A value from this profile is used by the algorithm at each iteration
POSIT     this is the position of the mechanism. A new value for POSIT is obtained from the position sensor at each iteration of the algorithm

## Error Limiter

This is used to clip the value of the error so that it remains within pre-chosen limits. This can be useful, for example, to prevent overshoot of the mechanism in cases where the mechanism has been prevented from following the profile because it becomes jammed with another mechanism and is then suddenly released.

$$error = infil - FPOS$$

error is clipped to be within a selected range +/- ERRLIM

## Non-Linearity and K-P

End point stiffness is improved by multiplying the forward gain factor K-P by a further factor "nlerr". When the error becomes zero the function "nlerr" rises to its maximum value. The rate at which "nlerr" rises, and the range over which it rises can be altered by tuning the parameter "SHARPN" in the equation shown below. The value of "NLOFF" is tuned to give a suitable value to the peak of "nlerr".

$$nlerr = 1.0 + NL\_OFF/(1.0 + SHARPN*error*error)$$

The error is then multiplied by the forward gain.
The variable uv is defined by the equation

$$uv = K\_P*nlerr*error$$

uv may be described as the active error reducing component of the algorithm.

## Differentiation

The position value is used to calculate the velocity as shown :

$$veloc = w2*(POSIT - pz-1)*ITER + 2.0*zx*vz-1 - x2*vz-2$$

w2= VFILT*VFILT
zx = 1.0 - VFILT
x2 = zx*zx

vz-1    is the value of the velocity from the last iteration (unfiltered)
vz-2    is the value of the velocity from the last but one iteration (unfiltered)
pz-1    is the value of the position from the last iteration (unfiltered)

The equation for evaluating veloc is a digital filter, which provides as estimate of velocity based on the position measurement at discrete times. VFILT is the tuned filter constant. It is used to obtain an acceptable compromise between noise and time delay. With rising VFILT, time delay is reducing, though noise in the velocity estimate due to noise on the position signal is increasing. As VFILT is reduced, noise is reduced at the expense of increased time delay, which may introduce oscillation into the mechanism movement. A compromise hase to be made.

uf is defined by

$$uf = uv - [FVELOC*K\_D]$$

where K_D is the velocity gain.

uf is the input to a force control loop. If the mechanism is in the correct demand position and the velocity is zero, the force required to move the mechanism to the correct position is zero and the value of uf is also zero.

Force Model

Gravity exerts force on the moving parts of the mechanism. In the take out this force is not constant. The weight of the piston and rod, and of the arm and tong head contribute to this force. As the mechanism moves from the blow mold through the vertical position and then down to the deadplate, the effect of the weight of the arm and tong head varies. It falls to a minimum at the 90 degree position. The force exerted by the pressures above and below the piston is calculated. The effective force available to move the mechanism is "FORCE":

gravity =    G1*9.81-G2*9.81*COS(10.0 - POSIT)*0.3142)
FORCE =    (PRESS_B*A_below-PRESS_A*A_above)-gravity
gravity       this is the name of the gravity term.
G1              mass of piston rod and piston
G2              related to mass of arm and tong head and to effective distance of centre of gravity. Value found by experimentation.
PRESS_A pressure above piston
PRESS_B pressure below piston
A_above    effective area of top of piston
A_below    effective area below piston

The values "PRESS_A" and "PRESS_B" come from the pressure transducers. Values are read at each algorithm iteration.

Calculation of valve demand output

The valve demand u is calculated from

$$u = uf- (fforce*K\_F)$$

where:

K_F   is the force gain.

The valve demand "u" is clipped to the physical limits of the system.

Update History

After the valve actuation signal is sent, the variables used within the filters and the differentiator are updated, e.g. :

fz-l - = fforce

vz-2- = vz-l
vz-l- = veloc

The algorithm then repeats.

## Claims

1. A control system for controlling the movement of a driven member (10) arranged to be driven between first and second positions by a pneumatic piston and cylinder device comprising:-

   a solenoid driven proportional pneumatic valve (16) adapted to control the supply of air under pressure to the piston and cylinder device,

   a transducer (26) which senses the position of the driven member (10),

   pressure sensors (25, 27) which sense the pressure on opposite sides of the piston (15) of the piston and cylinder device,

   an electronic signal processing system (32) incorporating a memory (42, 48) in which a motion profile is stored, which processing system throughout each cycle receives as a feed-back from the transducers (25, 26, 27) the position of the driven member (10) and the pressures on opposite sides of the piston (15) and which produces control signals for the valve (16) in accordance with a repetitive algorithm which takes account of

       (a) the displacement of the driven member (10) from the motion profile,

       (b) the velocity of the driven member (10) as derived from the rate of change of its position, and

       (c) the force exerted on the driven member (10) as derived from the pressure difference across the piston (15),

   so that the valve (16) supplies air to the piston and cylinder device to cause the member (10) to move from rest at the first position to the second position in a manner determined by the motion profile with the velocity and acceleration of the driven member (10) being controlled so that the member (10) moves from rest at the first position to rest at the second position without exceeding permitted maximum values of acceleration.

2. A control system according to claim 1 wherein the algorithm also takes account of variation of the load on the member (10) with movement of the piston and cylinder device.

3. A system according to claim 1 or claim 2 wherein operation of the pneumatic valve (16) is controlled by a valve controller (34) connected to the valve (16) by two lines, one of which supplies a drive signal to the valve (16) to drive the spool of the valve and the other of which returns a spool position indication signal.

4. A system according to any one of claims 1 to 3, wherein the pressure sensors (25, 27) sense the pressures in the cylinder above and below the piston (15) and the position-sensing transducer (26) causes movement of the piston.

5. A system according to claim 4, wherein the three transducers (25, 26, 27) supply signals through analogue/digital converters to a servo control card (32) incorporating a micro-controller (28) which instructs the valve controller (34) through a digital/analogue converter (36).

6. A system according to claim 5, wherein the micro-controller (28) is connected to a memory (42, 48) which stores a profile program for the movement of the driven member (10).

7. A system according to claim 6, wherein a supervisory computer (44) for the machine is connected through an interface of the servo control card (32) to pass algorithm information to the memory (42, 48) which information is accessed by the valve controller (34) under the control of a synchronisation signal.

8. A system according to claim 7, wherein means are provided to enable the constant factors of the algorithm information to be analysed and adjustments stored in the memory (42, 48).

9. A system according to claim 8, wherein the micro-controller (28) repetitively accesses the memory (42, 48) for the profile program, force limits, algorithm program and any factor adjustments and combines the accessed information to generate position demand signals fed to the valve controller.

10. A system according to any one of claims 1 to 9, wherein the algorithm operates repetitively to generate position signals subject to a valve demand limit, as the basis of a filtered force valve, a filtered velocity value, and a filtered position error demand value subject to an error limit.

11. An operating mechanism for a glassware forming machine comprising a driven member (10), a pneumatic piston and cylinder device arranged to operate the driven member (10), and a control system according to any one of the preceding claims in which the proportional pneumatic valve (16) controls the supply of air under pressure to the piston and cylinder device.

12. An operating mechanism according to claim 11, in which the driven member (10) is part of a takeout mechanism.

13. An operating mechanism according to claim 11, in which the driven member (10) is part of an invert mechanism.

**Patentansprüche**

1. Ein Steuersystem zum Steuern der Bewegung eines zwischen einer ersten und einer zweiten Stellung antreibbaren Gliedes (10) durch eine pneumatische Kolben- und Zylindervorrichtung, bestehend aus:

   einem von einer Magnetspule angetriebenen pneumatischen Proportionalventil (16) zum Steuern der Zufuhr von Druckluft zu der Kolben- und Zylindervorrichtung,
   einem Meßwertwandler (26), der die Stellung des antreibbaren Gliedes (10) ermittelt,
   Drucksensoren (25, 27), die den Druck auf beiden Seiten des Kolbens (15) der Kolben- und Zylindervorrichtung ermitteln,
   einem elektronischen Signalverarbeitungssystem (32) einschließlich eines Speichers (42, 48), in dem ein Bewegungsprofil gespeichert ist, wobei das Verarbeitungssystem während jedes Zyklus von den Meßwertwandlern (25, 26, 27) als eine Rückkopplung die Stellung des antreibbaren Gliedes (10) und die Drücke auf beiden Seiten des Kolbens (15) empfängt und für das Ventil (16) nach Maßgabe eines sich wiederholenden Algorithmus Steuersignale erzeugt, wobei der Algorithmus

   (a) die Versetzung des antreibbaren Gliedes (10) gegenüber dem Bewegungsprofil,
   (b) die Geschwindigkeit des antreibbaren Gliedes (10) als Ableitung vom Grade der Änderung von dessen Stellung und
   (c) die auf das antreibbare Glied (10) ausgeübte Kraft, wie sie von dem Druckunterschied über dem Kolben (15) abgeleitet wird, berücksichtigt, so daß das Ventil (16) der Kolben- und Zylindervorrichtung Luft zuführt, um eine Verschiebung des Gliedes (10) aus einer Ruhelage an der ersten Stellung in die zweite Stellung in einer durch das Bewegungsprofil bestimmten Weise zu bewirken, wobei die Geschwindigkeit und die Beschleunigung des antreibbaren Gliedes (10) so gesteuert werden, daß sich das Glied (10) aus der Ruhelage an der ersten Stellung in eine Ruhelage an der zweiten Stellung ohne Überschreiten der zugelassenen maximalen Beschleunigungswerte bewegt.

2. Ein Steuersystem nach Anspruch 1, wobei der Algorithmus auch die mit der Bewegung der Kolben- und Zylindervorrichtung stattfindende Veränderung der auf das Glied (10) einwirkenden Last berücksichtigt.

3. Ein System nach Anspruch 1 oder Anspruch 2, wobei der Betrieb des pneumatischen Ventils (16) durch einen über zwei Leitungen, von denen eine zum Verschieben des Ventilschiebers dem Ventil (16) ein Antriebssignal zuführt und die andere ein die Stellung des Schiebers anzeigendes Signal zurückführt, an es angeschlossenen Ventilregler (34) geregelt wird.

4. Ein System nach irgendeinem der Ansprüche 1 bis 3, wobei die Drucksensoren (25, 27) die Drücke in dem Zylinder über und unter dem Kolben (15) ermitteln und der die Stellung ermittelnde Meßwertwandler (26) die Verschiebung des Kolbens bewirkt.

**5.** Ein System nach Anspruch 4, wobei die drei Meßwertwandler (25, 26, 27) die Signale über Analog/Digitalwandler einer einen Mikrokontroller (28) enthaltenden Servosteuerkarte (32) zuführen, die den Ventilregler (34) über einen Digital/Analogwandler (36) steuert.

**6.** Ein System nach Anspruch 5, wobei der Mikrokontroller (28) an einen Speicher (42, 48) angeschlossen ist, der ein Profilprogramm für die Bewegung des antreibbaren Gliedes (10) speichert.

**7.** Ein System nach Anspruch 6, wobei ein Überwachungscomputer (44) für die Maschine über eine Schnittstelle der Servosteuerkarte (32) angeschlossen ist zum Weiterleiten der Algorithmusinformation an den Speicher (42, 48), wobei der Ventilregler (34) unter der Steuerung durch ein Synchronisationssignal zu dieser Information Zugang hat.

**8.** Ein System nach Anspruch 7, wobei Mittel vorgesehen sind zum Ermöglichen einer Analyse der konstanten Faktoren der Algorithmusinformation und der in dem Speicher (42, 48) gespeicherten Einstellungen.

**9.** Ein System nach Anspruch 5, wobei der Mikrokontroller (28) wiederholt auf den Speicher (42, 48) für das Profilprogramm, die Kraftbegrenzungen, das Algorithmusprogramm und irgendwelche Faktoreinstellungen zugreift und die entnommene Information zum Erzeugen von dem Ventilregler zugeführten Stellungsanforderungssignalen kombiniert.

**10.** Ein System nach irgendeinem der Ansprüche 1 bis 9, wobei der Algorithmus zum Erzeugen von Stellungssignalen nach Maßgabe einer Ventilanforderungsgrenze wiederholt tätig wird als Grundlage eines gefilterten Kraftwertes, eines gefilterten Geschwindigkeitswertes und eines gefilterten Stellungsfehleranforderungswertes nach Maßgabe einer Fehlerbegrenzung.

**11.** Ein Betreibermechanismus für eine Maschine zum Herstellen von Glaswaren mit einem antreibbaren Glied (10), einer pneumatischen Kolben- und Zylindervorrichtung zum Betätigen des antreibbaren Gliedes (10) und einem Steuersystem nach irgendeinem der vorhergehenden Ansprüche, bei dem das pneumatische Proportionalventil (16) die Zufuhr von Druckluft zu der Kolben- und Zylindervorrichtung steuert.

**12.** Ein Betreibermechanismus nach Anspruch 11, bei dem das antreibbare Glied (10) Teil eines Herausnahmemechanismus ist.

**13.** Ein Betreibermechanismus nach Anspruch 11, bei dem das antreibbare Glied (10) Teil eines Umkehrmechanismus ist.

**Revendications**

**1.** Système de commande destiné à commander le mouvement d'un élément entraîné (10) agencé pour être entraîné entre des première et deuxième positions par un dispositif pneumatique à piston et cylindre, comprenant:

un distributeur pneumatique proportionnel (16) entraîné par électro-aimant, adapté pour commander l'envoi de l'air sous pression au dispositif à piston et cylindre,
un transducteur (26) qui capte la position de l'élément entraîné (10),
des capteurs de pression (25, 27) qui captent les pressions de part et d'autre du piston (15) du dispositif à piston et cylindre,
un système électronique (32) de traitement des signaux comprenant une mémoire (42, 48) dans laquelle un profil de mouvement est stocké, lequel système de traitement reçoit, sur toute la durée de chaque cycle, en tant que réaction, en provenance des transducteurs (25, 26, 27), la position de l'élément entraîné (10) et la pression régnant de part et d'autre du piston (15), et produit des signaux de commande pour le distributeur (16) en accord avec un algorithme répétitif qui tient compte de :

(a) l'écart de l'élément entraîné (10) par rapport au profil du mouvement ;
(b) la vitesse de l'élément entraîné (10), dérivée du degré de variation de sa position, et
(c) la force exercée sur l'élément entraîné (10), dérivée de la différence de pression, de part et d'autre du piston (15), de sorte que le distributeur (16) envoie de l'air au dispositif à piston et cylindre pour amener l'élément (10) à se déplacer de l'arrêt à sa première position à l'arrêt à sa deuxième position d'une façon déterminée par le profil de mouvement, la vitesse et l'accélération de l'élément entraîné (10) étant commandées de telle manière que l'élément (10) se déplace de l'arrêt à la première position à l'arrêt à la deuxième position sans excéder des valeurs d'accélération maximales admises.

2. Système de commande selon la revendication 1, dans lequel l'algorithme prend aussi en compte la variation de la charge appliquée à l'élément (10) sous l'effet du mouvement du dispositif à piston et cylindre.

3. Système selon la revendication 1 ou la revendication 2, dans lequel la manoeuvre du distributeur pneumatique (16) est commandée par un moyen de commande (34) de distributeur connecté au distributeur (16) par deux lignes, dont l'une transmet un signal d'entraînement au distributeur (16) pour entraîner le tiroir de distributeur et dont l'autre renvoie un signal d'indication de la position du tiroir.

4. Système selon une quelconque des revendications 1 à 3, dans lequel les capteurs de pression (25, 27) captent les pressions régnant dans le cylindre au-dessus et au-dessous du piston (15) et le transducteur capteur de position (26) provoque le déplacement du piston.

5. Système selon la revendication 4, dans lequel les trois transducteurs (25, 26, 27) transmettent des signaux à travers des convertisseurs analogiques/numériques à une carte de servocommande (32) comprenant un micro-calculateur (28) qui fournit des instructions au moyen de commande (34) du distributeur à travers un convertisseur numérique/analogique (36).

6. Système selon la revendication 5, dans lequel le micro-calculateur (28) est connecté à une mémoire (42, 48) qui stocke un programme de profil pour le mouvement de l'élément entraîné (10).

7. Système selon la revendication 6, dans lequel un ordinateur superviseur (44) prévu pour la machine est connecté à travers une interface à la carte de servocommande (32) pour transmettre l'information de l'algorithme à la mémoire (42, 48), le moyen de commande (34) du distributeur ayant accès à cette information sous la commande d'un signal de synchronisation.

8. Système selon la revendication 7, dans lequel des moyens sont prévus pour permettre aux facteurs constants de l'information de l'algorithme d'être analysés et permettre aux ajustements d'être stockés dans la mémoire (42, 48).

9. Système selon la revendication 8, dans lequel le micro-calculateur (28) a répétitivement accès à la mémoire (42, 48) pour lire le programme de profil, les limites de force, le programme d'algorithme et les éventuels ajustements de facteurs et combine l'information à laquelle il a accédé pour engendrer des signaux de demande de position transmis au moyen de commande de distributeur.

10. Système selon une quelconque des revendications 1 à 9, dans lequel l'algorithme opère répétitivement pour engendrer des signaux de position soumis à une limite de demande de distributeur, en tant que base d'une valeur de force filtrée, d'une valeur de vitesse filtrée et d'une valeur de demande d'erreur de position filtrée soumis à une limite d'erreur.

11. Mécanisme de commande pour une machine à mouler les objets en verre, comprenant un élément entraîné (10), un dispositif pneumatique à piston et cylindre agencé pour actionner l'élément entraîné (10), et un système de commande selon une quelconque des revendications précédentes, dans lequel le distributeur pneumatique proportionnel (16) commande l'envoi d'air sous pression au dispositif à piston et cylindre.

12. Mécanisme de commande selon la revendication 11, dans lequel l'élément entraîné (10) fait partie d'un mécanisme de prélèvement.

13. Mécanisme de commande selon la revendication 11, dans lequel l'élément entraîné (10) fait partie d'un mécanisme de retournement.

Fig. 1

EP 0 691 941 B1

Fig. 2

SYNCHRONISATION
SIGNAL

Fig. 3

Fig. 4